# EUROPEAN PATENT APPLICATION

(11) **EP 4 621 502 A1**
(43) Date of publication of application: **24.09.2025**
(21) Application number: 24777450.8
(22) Date of filing: 17.01.2024
(51) Int. Cl.: G04G 17/02, G04G 17/08, G04G 19/00, H02J 50/00, H02J 7/00

(54) **WATCH CASE AND ELECTRONIC DEVICE**

(30) Priority: 31.03.2023 CN 202320746109 U
(71) Applicant: Huawei Technologies Co., Ltd., Shenzhen, Guangdong 518129 (CN)
(72) Inventor: MENG, Fanyue, Shenzhen, Guangdong 518129 (CN); ZHANG, Le, Shenzhen, Guangdong 518129 (CN); SONG, Shilei, Shenzhen, Guangdong 518129 (CN); YAO, Yuliang, Shenzhen, Guangdong 518129 (CN); LIU, Xiaogang, Shenzhen, Guangdong 518129 (CN); ZHANG, Youliang, Shenzhen, Guangdong 518129 (CN); ZHANG, Youping, Shenzhen, Guangdong 518129 (CN)
(74) Representative: Goddar, Heinz J.
(86) International application number: PCT/CN2024/072821
(87) International publication number: WO 2024/198655

(57) **Abstract**

A watch case (10) is disclosed, including a first connecting member (1), a second connecting member (2), a magnetic conductive sheet (3), a coil (4), and a support portion (5), where the first connecting member (1) is provided with an annular groove (U); the second connecting member (2) is connected to the first connecting member (1), and at least a part of the second connecting member (2) covers an opening of the groove (U); the magnetic conductive sheet (3) is disposed in an annular manner and disposed at a bottom of the groove (U); the coil (4) is disposed in an annular manner and disposed on a side that is of the magnetic conductive sheet (3) and that is away from the bottom of the groove (U), an inner boundary of the magnetic conductive sheet (3) exceeds an inner boundary of the coil (4), and a part that is of the magnetic conductive sheet (3) and that exceeds the inner boundary of the coil (4) is a first component portion (31); and the support portion (5) is disposed in an annular manner and disposed between the first component portion (31) and the second connecting member (2). This can avoid a problem of poor appearance caused by partial shrinkage of the watch case (10), and can also prevent deformation of the coil (4) used for wireless charging, thereby ensuring charging performance of an electronic device (100). The electronic device (100) is further provided.

## Description

This application claims priority to Chinese Patent Application No. 202320746109.4, filed with the China National Intellectual Property Administration on March 31, 2023 and entitled "WATCH CASE AND ELECTRONIC DEVICE", which is incorporated herein by reference in its entirety.

### TECHNICAL FIELD

This application relates to the field of wearable device technologies, and in particular, to a watch case and an electronic device.

### BACKGROUND

As common wearable devices, watches are widely favored due to lightweight, compact design, and comfortable wearing. In addition, with development of electronic technologies, smartwatches that integrate functions such as time display, motion detection, heart rate monitoring, message reminding, and blood oxygen detection are widely used, and have a broad application prospect.

With gradual emergence of wireless charging technologies, smartwatches with wireless charging structures are increasingly favored. However, currently, a smartwatch with a wireless charging structure is prone to problems such as coil deformation and poor appearance, which affects a charging effect of the watch, reduces a yield rate of the watch, and is not conducive to development of a smartwatch that can be wirelessly charged.

### SUMMARY

Embodiments of this application provide a watch case and an electronic device, to improve structural stability of the watch case, avoid appearance defects caused by partial collapse or shrinkage, and the like of the watch case, and reduce a probability that a coil is deformed, so as to ensure a charging effect of the coil.

To achieve the foregoing objectives, the following technical solutions are used in embodiments of this application.

According to a first aspect, a watch case is provided, where the watch case includes a first connecting member, a second connecting member, a magnetic conductive sheet, a coil, and a support portion.

The first connecting member is provided with an annular groove. The second connecting member is connected to the first connecting member, and at least a part of the second connecting member covers an opening of the annular groove. The magnetic conductive sheet is disposed in an annular manner, and is disposed at a bottom of the groove. The coil is disposed in an annular manner, and is disposed on a side that is of the magnetic conductive sheet and that is away from the bottom of the groove. An inner boundary of the magnetic conductive sheet exceeds an inner boundary of the coil, and a part that is of the magnetic conductive sheet and that exceeds the inner boundary of the coil is the first component portion. The support portion is disposed in an annular manner, and is disposed between the first component portion and the second connecting member.

In this embodiment of this application, the inner boundary of the magnetic conductive sheet is set to exceed the inner boundary of the coil, so that an area of the magnetic conductive sheet is larger than an area of the coil, thereby improving a shielding effect of the magnetic conductive sheet on a magnetic field of the coil, enhancing a magnetic leakage prevention effect, and improving wireless charging efficiency of an electronic device.

The inner boundary of the magnetic conductive sheet exceeds the inner boundary of the coil, so that there is a gap in a cavity enclosed by the groove of the first connecting member and the second connecting member. After assembly is completed, a problem of poor appearance such as sinking easily occurs in a position of the gap. In this embodiment of this application, a support portion is disposed, and the support portion is disposed between the first component portion and the second connecting member, that is, the support portion is filled in the foregoing idle cavity, to provide a specific support force and avoid the poor appearance of the watch case.

In addition, the support portion is disposed on the first component portion of the magnetic conductive sheet, that is, the annular support portion is sleeved in an inner ring of the annular coil, so that a position shift of the coil in a direction toward the inner ring can be avoided, thereby avoiding a problem that the charging efficiency is reduced due to inaccurate alignment between the coil and an external charging device.

The support portion is disposed between the first component portion and the second connecting member. In an injection molding process of the second connecting member, the support portion is blocked, so that an undesirable phenomenon such as melting of the magnetic conductive sheet caused by direct impact of high-temperature plastic on the magnetic conductive sheet can be avoided, thereby improving a product yield rate of the electronic device.

In a possible implementation of the first aspect, the watch case further includes a first adhesive layer. The first adhesive layer is disposed on a side surface that is of the magnetic conductive sheet and that is away from the bottom of the groove. The coil is bonded to the magnetic conductive sheet through the first adhesive layer, and the support portion is bonded to the magnetic conductive sheet through the first adhesive layer.

With the disposed first adhesive layer, the coil and the support portion may be fastened to the magnetic conductive sheet, so that a position of the coil relative to the magnetic conductive sheet is fixed, thereby avoiding the problem that charging efficiency of the electronic device is reduced due to the position shift of the coil.

In a possible implementation of the first aspect, a material of the first adhesive layer includes a high-temperature-resistant material. The material of the first adhesive layer includes the high-temperature-resistant material, so that firmness of bonding between the coil and the magnetic conductive sheet and bonding between the support portion and the magnetic conductive sheet can be improved, thereby avoiding a problem that a position of the coil is shifted because a bonding strength of the first adhesive layer is reduced due to a high-temperature environment in an injection molding process of the first connecting member and the second connecting member, thereby further ensuring the charging efficiency of the electronic device.

In a possible implementation of the first aspect, an outer boundary of the magnetic conductive sheet exceeds an outer boundary of the coil, and a part that is of the magnetic conductive sheet and that exceeds the outer boundary of the coil is a second component portion. The watch case further includes a first bonding portion. The first bonding portion is disposed in an annular manner, and is disposed between the second component portion and the second connecting member.

The outer boundary of the magnetic conductive sheet is set to exceed the outer boundary of the coil, so that an area of the magnetic conductive sheet is further larger than an area of the coil, thereby improving a shielding effect of the magnetic conductive sheet on a magnetic field of the coil, and enhancing a magnetic leakage prevention effect.

With the disposed first bonding portion, the magnetic conductive sheet 3 and the coil 4 may be further bonded, to further improve stability between the magnetic conductive sheet 3 and the coil 4, and avoid a problem that charging efficiency is reduced due to a change in a relative position relationship between the magnetic conductive sheet 3 and the coil 4, thereby improving a wireless charging effect of the electronic device.

The first bonding portion is disposed between the second component portion and the second connecting member 2, so that the first bonding portion is filled in a gap formed after the outer boundary of the magnetic conductive sheet exceeds the outer boundary of the coil, thereby providing a specific support force, and avoiding a problem of poor appearance such as sinking of the watch case at the gap.

In addition, the first bonding portion is sleeved on an outer ring of the coil, so that a position shift of the coil in a direction toward the outer ring can be avoided, thereby further avoiding a problem that the charging efficiency is reduced due to inaccurate alignment between the coil and the external charging device.

The first bonding portion is disposed on a side that is of the second component portion and that is away from the bottom of the groove. In an injection molding process of the second connecting member, the first bonding portion is blocked, so that an undesirable phenomenon such as melting of the magnetic conductive sheet caused by direct impact of the high-temperature plastic on the magnetic conductive sheet can be avoided, thereby improving a product yield rate of the electronic device.

In a possible implementation of the first aspect, there is a first gap between the magnetic conductive sheet and a side wall of the groove, and a part of the first bonding portion is filled in the first gap. This prevents a position shift of the magnetic conductive sheet is further prevented, thereby ensuring the charging efficiency of the electronic device.

In a possible implementation of the first aspect, a surface that is of the coil and that is away from the magnetic conductive sheet is closer to the magnetic conductive sheet than a surface that is of the support portion and that is away from the magnetic conductive sheet. An edge part of a surface that is of the coil and that is away from the bottom of the groove, a side surface that is of the support portion and that is close to the coil, and the second connecting member enclose a first sub-cavity.

The watch case further includes a second bonding portion. The second bonding portion is disposed in an annular manner; and the second bonding portion is filled in the first sub-cavity.

With the disposed second bonding portion, the support portion may be further bonded to the coil, to further improve stability of a structure of the coil, and avoid a problem that the charging efficiency is reduced due to a change in a position of the coil, thereby improving the wireless charging effect of the electronic device.

The second bonding portion is disposed to fill the first sub-cavity, so that the second bonding portion can provide a specific support force, to avoid the problem of poor appearance such as sinking of the watch case at the first sub-cavity.

In a possible implementation of the first aspect, there is a second gap between the coil and the support portion, and a part of the second bonding portion is filled in the second gap. In this way, the position shift of the coil is further avoided, thereby ensuring the charging efficiency of the electronic device.

In a possible implementation of the first aspect, a material of the support portion includes a magnetic material.

In a possible implementation of the first aspect, the second connecting member includes a first sub-portion and a second sub-portion that are integrally disposed, the second sub-portion is arched relative to the first sub-portion in a direction away from the first connecting member, the first sub-portion covers the surface that is of the coil and that is away from the bottom of the groove, and the second sub-portion covers a surface that is of the support portion and that is away from the bottom of the groove.

According to a second aspect, an electronic device is provided, where the electronic device includes a sensor and the watch case according to any one of embodiments of the first aspect.

A first opening is further provided on the first connecting member in the watch case, and a groove of the first connecting member is provided around the first opening. The second connecting member in the watch case is provided with a second opening, and the second opening communicates with the first opening. The sensor is disposed on a side that is of the first connecting member and that is away from the second connecting member, and the first opening and the second opening expose at least a part of the sensor.

For a technical effect brought by the electronic device according to the second aspect, refer to the technical effect brought by a design manner of the watch case according to the first aspect. Details are not described herein again.

### BRIEF DESCRIPTION OF DRAWINGS

FIG. 1 is a side view of an electronic device according to an embodiment of this application;
FIG. 2 is a diagram of a structure along a direction A in FIG. 1;
FIG. 3 is an exploded view of a structure of an electronic device according to an embodiment of this application;
FIG. 4 is a sectional view of a watch case according to an embodiment of this application;
FIG. 5 is an enlarged view of a structure in a dashed box B in FIG. 4;
FIG. 6 is a diagram of a partial structure along a direction C in FIG. 5; and
FIG. 7 is a diagram of a partial structure along a direction D in FIG. 5.

### DESCRIPTION OF EMBODIMENTS

The following clearly and completely describes technical solutions in some embodiments of this application with reference to accompanying drawings. It is clear that the described embodiments are merely some rather than all of embodiments of this application. All other embodiments obtained by a person of ordinary skill in the art based on embodiments of this application shall fall within the protection scope of this application.

In the descriptions of this application, it should be understood that directions or position relationships indicated by the terms such as "center", "up", "down", "front", "rear", "left", "right", "vertical", "horizontal", "top", "bottom", "inside", and "outside" are based on the directions or the position relationships shown in the accompanying drawings, and are merely intended to describe this application and simplify the descriptions, but not intended to indicate or imply that an indicated apparatus or component shall have a specific direction or be formed and operated in a specific direction, and therefore cannot be understood as a limitation on this application.

Unless otherwise required by the context, throughout the specification and claims, the term "include" is interpreted as "open and inclusive", that is, "include but not limited to". In the description of the specification, terms such as "an embodiment", "some embodiments", "example embodiments", "examples", or "some examples" are intended to indicate that specific features, structures, materials, or features related to the embodiments or examples are included in at least one embodiment or example of this application. The foregoing schematic representations of the terms do not necessarily refer to a same embodiment or example. In addition, the specific feature, structure, material, or characteristic may be included in any one or more embodiments or examples in any appropriate manner.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

In the description of some embodiments, expressions of "connected" and extensions thereof may be used. The term "connection" should be understood in a broad sense. For example, the "connection" may be a fixed connection, a detachable connection, or an integrated connection, or may be a direct connection or an indirect connection implemented through an intermediate medium.

Example implementations are described herein with reference to sectional views as idealized example drawings. In the accompanying drawings, for clarity, thicknesses of layers and regions are increased. Variations in shape with respect to the accompanying drawings due to, for example, manufacturing technologies and/or tolerances may be envisaged. Therefore, the example embodiments should not be construed to be limited to the shapes of the regions shown herein, but to include deviations in shape due to, for example, manufacturing. Therefore, the regions shown in the accompanying drawings are essentially examples, and shapes thereof are not intended to show actual shapes of regions of a device, and are not intended to limit a scope of the example implementations.

In addition, a scenario described in embodiments of this application is intended to describe the technical solutions in embodiments of this application more clearly, but does not constitute a limitation on the technical solutions provided in embodiments of this application. A person of ordinary skill in the art may learn that as a new scenario emerges, the technical solutions provided in embodiments of this application are also applicable to a similar technical problem.

An embodiment of this application provides an electronic device. The electronic device may be, for example, different types of user equipment or terminal devices such as a mobile phone (Mobile Phone), a tablet computer (Pad), a personal digital assistant (Personal Digital Assistant, PDA), an intelligent wearable product (for example, a smartwatch or a smart band), a virtual reality (Virtual Reality, VR) terminal device, an augmented reality (Augmented Reality, AR) terminal device, and a chargeable household appliance.

In the following embodiments of this application, an example in which the electronic device is a watch is merely used to describe the electronic device, and a specific form of the electronic device is not specially limited. It may be understood that the electronic device may alternatively be another device.

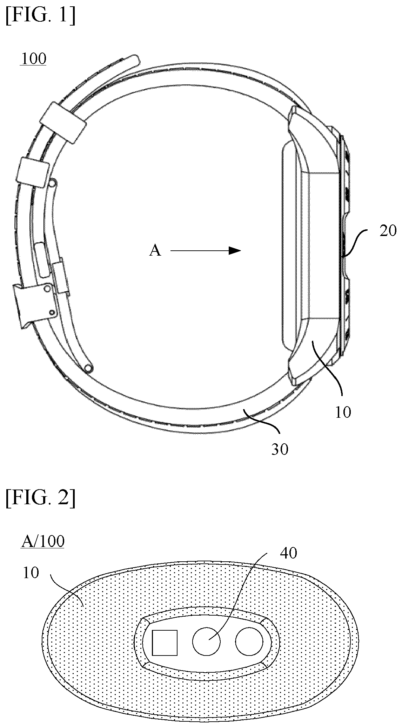

FIG. 1 is a side view of an electronic device 100 according to an embodiment of this application.

For example, the electronic device 100 may be worn on a wrist, and may implement functions such as time display, timing, time reporting, message notification, exercise detection, heart rate monitoring, and blood oxygen level detection.

As shown in FIG. 1, the electronic device 100 may include a watch case 10. As a housing of the electronic device 100, the watch case 10 bears and protects a component (for example, a movement) of the electronic device 100, to avoid external damage to the component inside the electronic device 100, for example, damage caused by a collision or water vapor.

For example, as shown in FIG. 1, the electronic device 100 may further include a watch face 20. The watch face 20 is embedded in the watch case 10, and the watch face 20 may display time, information, and the like.

For example, as shown in FIG. 1, the electronic device 100 may further include a watch band 30, and the watch band 30 is configured to encircle a wrist of a user, to implement wearing of the electronic device 100.

FIG. 2 is a diagram of the electronic device 100 in a direction A in FIG. 1.

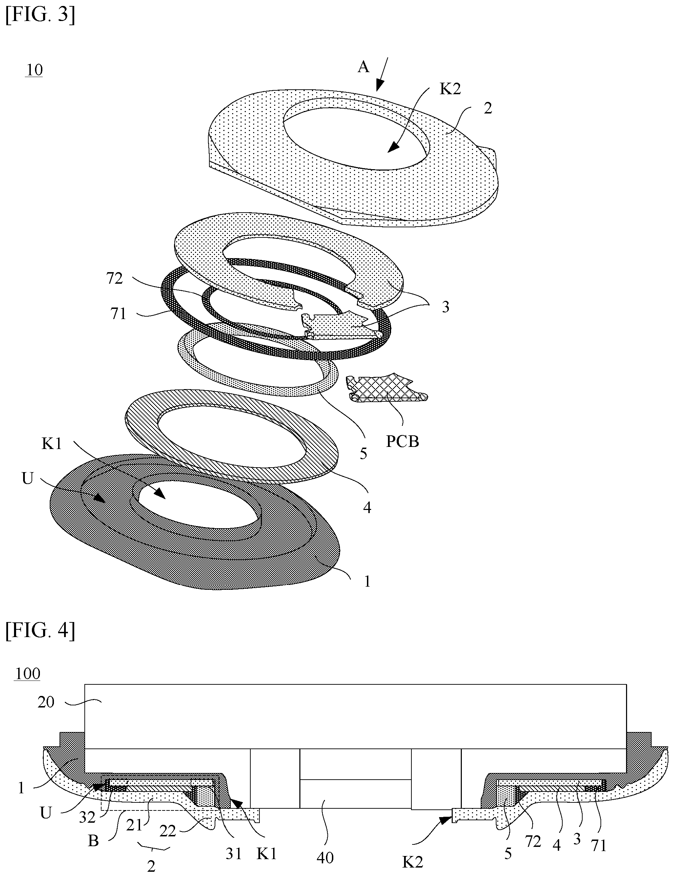

It may be understood that, with reference to FIG. 1 and FIG. 3, the direction A is a direction in which a back of the watch case 10 points to the watch face 20. The back of the watch case 10 is a side that is of the watch case 10 and that is in contact with the wrist of the user when the user wears the electronic device 100 on the wrist. FIG. 2 is a view of the back of the watch case 10.

As shown in FIG. 2, the electronic device 100 further includes a sensor 40, and the sensor 40 is embedded in the watch case 10.

The sensor 40 is configured to implement functions such as motion detection, heart rate monitoring, blood oxygen saturation detection, electrocardiogram activity detection, or body temperature detection of the electronic device 100.

For example, when the user wears the electronic device 100 on the wrist, the sensor 40 is located on a side that is of the watch face 20 and that is close to the wrist of the user, so that the sensor 40 collects related information of the user, such as a heart rate.

For example, there may be one or more sensors 40.

Refer to FIG. 2. The watch case 10 has a window. The window exposes at least a part of the sensor 40, to facilitate smooth transmission of a detection signal of the sensor 40. For example, when the sensor 40 detects an item such as a human heart rate by using a laser, the window facilitates the laser to reach a human body (for example, the wrist).

FIG. 3 is an exploded view of a structure of a watch case 10 according to an embodiment of this application. FIG. 4 is a sectional view of an electronic device 100 according to an embodiment of this application.

In some embodiments, as shown in FIG. 3 and FIG. 4, the watch case 10 includes a first connecting member 1, a second connecting member 2, a magnetic conductive sheet 3, a coil 4, and a support portion 5.

Refer to FIG. 3. The first connecting member 1 is provided with an annular groove U. The annular groove U is used to bear a component, for example, may be used to bear a wireless charging component such as the coil 4 or the magnetic conductive sheet 3.

For example, the annular groove U may be of a circular ring structure (as shown in FIG. 3), a square ring structure, or a ring structure in another shape. This is not limited in this application.

For example, refer to FIG. 3. A first opening K1 is further provided on the first connecting member 1, and the groove U is provided around the first opening K1. The first opening K1 is used to expose the sensor 40 in the electronic device 100, so that the sensor 40 sends a detection signal such as a laser to a wrist of a user, to implement a corresponding function of the sensor 40.

Refer to FIG. 4. The second connecting member 2 is connected to the first connecting member 1. For example, the second connecting member 2 and the first connecting member 1 may be clamped or bonded. A connection manner of the first connecting member 1 and the second connecting member 2 is not limited in this embodiment of this application.

For example, the first connecting member 1 and the second connecting member 2 may be manufactured through two-shot injection molding, to be specific, the first connecting member 1 and the second connecting member 2 may be manufactured through two times of injection molding in sequence.

For example, refer to FIG. 3. The second connecting member 2 is further provided with a second opening K2. The second opening K2 communicates with the first opening K1, and both the first opening K1 and the second opening K2 are used to expose the sensor 40 in the electronic device 100, so that the sensor 40 sends a detection signal such as a laser to the wrist of the user, to implement a corresponding function of the sensor 40.

It may be understood that, with reference to FIG. 4, when the user wears the electronic device 100 on the wrist, the second connecting member 2 is in contact with the wrist of the user, and the first connecting member 1 is away from the wrist of the user relative to the second connecting member 2. For example, the watch face 20 may be disposed on a side that is of the first connecting member 1 and that is away from the second connecting member 2.

For example, refer to FIG. 4. The second connecting member 2 includes a first sub-portion 21 and a second sub-portion 22. The second sub-portion 22 is arched relative to the first sub-portion 21 in a direction away from the first connecting member 1, the first sub-portion 21 covers a surface that is of the coil 4 and that is away from a bottom of the groove U, and the second sub-portion 22 covers a surface that is of the support portion 5 and that is away from the bottom of the groove U. That is, a part that is of the second connecting member 2 and that corresponds to the support portion 5 is arched.

Refer to FIG. 4. The second sub-portion 22 is disposed around the second opening K2, in other words, a part that is of the second connecting member 2 and that is around the sensor 40 is arched, so that the second connecting member 2 is in contact with the wrist of the user, thereby improving accuracy of a function such as heart rate monitoring of the sensor 40.

Refer to FIG. 4. At least a part of the second connecting member 2 covers an opening of the groove U, to enclose a cavity together with the groove U. The magnetic conductive sheet 3, the coil 4, and the support portion 5 are all disposed in the cavity.

For example, refer to FIG. 3. The watch case 10 may further include a circuit board PCB, and the watch face 20 and/or the sensor 40 may be electrically connected to the circuit board PCB. For example, the circuit board PCB may be a printed circuit board.

For example, the circuit board PCB may alternatively be disposed in the cavity enclosed by the groove U of the first connecting member 1 and the second connecting member 2.

Refer to FIG. 3 and FIG. 4. The magnetic conductive sheet 3 is disposed in an annular manner, and is disposed at the bottom of the groove U. The magnetic conductive sheet 3 may shield a magnetic field generated by the coil 4, so that the magnetic field generated by the coil 4 is concentrated in a range in which the coil 4 is located, thereby reducing a magnetic leakage phenomenon of the coil 4, and improving a wireless charging effect of the coil 4.

For example, a material of the magnetic conductive sheet 3 may include nanocrystalline, a ferrite material, silicon steel, or another magnetic material.

For example, the magnetic conductive sheet 3 may be of a single-layer structure, or may be of a multilayer structure disposed in a stacked manner.

For example, the magnetic conductive sheet 3 may be integrally formed. Alternatively, with reference to FIG. 3, the magnetic conductive sheet 3 may further include a plurality of sub-portions that are clamped to each other, so that a cable of a structure such as the coil 4 passes through the plurality of sub-portions, thereby facilitating electrical connection.

Refer to FIG. 3 and FIG. 4. The coil 4 is disposed in an annular manner, and is disposed on the side that is of the magnetic conductive sheet 3 and that is away from the bottom of the groove U. The coil 4 may be configured to implement a wireless charging function of the electronic device 100.

For example, the coil 4 may be formed by winding a conductive wire. For example, the conductive wire forming the coil 4 may be an enameled wire.

For example, the conductive wire forming the coil 4 may be a single-strand winding or a multi-strand winding.

For example, a cross section of the conductive wire forming the coil 4 may be a circle, an ellipse, a rectangle, or in another shape.

For example, an end of the conductive wire forming the coil 4 may be electrically connected to the circuit board PCB.

For example, a material of the conductive wire forming the coil 4 may include a conductive material such as copper.

For example, there may be one or more coils 4.

For example, positions of the coil 4 and the magnetic conductive sheet 3 are fixed relative to each other, so as to avoid a decrease in an effect of reducing magnetic leakage of the magnetic conductive sheet 3 due to position shifts of the coil 4 and the magnetic conductive sheet 3.

For example, refer to FIG. 3 and FIG. 4. A shape of the magnetic conductive sheet 3 is similar to a shape of the coil 4, so that a magnetic field of the magnetic conductive sheet 3 is accurately concentrated in a position of the coil 4.

Refer to FIG. 4. An inner boundary of the magnetic conductive sheet 3 exceeds an inner boundary of the coil 4, and a part that is of the magnetic conductive sheet 3 and that exceeds the inner boundary of the coil 4 is the first component portion 31.

It may be understood that each annular pattern has two boundaries. One boundary is closer to a geometric center of the annular pattern than the other boundary, and a size (a radius or a curvature radius) of the boundary closer to the geometric center is smaller. In this application, the boundary with the smaller size is the inner boundary, and a boundary with a relatively large size is the outer boundary.

The inner boundary of the magnetic conductive sheet 3 is set to exceed the inner boundary of the coil 4, so that an area of the magnetic conductive sheet 3 is larger than an area of the coil 4, thereby improving a shielding effect of the magnetic conductive sheet 3 on a magnetic field of the coil 4, and enhancing a magnetic leakage prevention effect.

For example, refer to FIG. 3 and FIG. 4. A width of the magnetic conductive sheet 3 (for example, a radius of a circle enclosed by the outer boundary minus a radius of a circle enclosed by the inner boundary) is larger than a width of the coil 4.

For example, refer to FIG. 3 and FIG. 4. An area of the magnetic conductive sheet 3 is larger than an area of the coil 4.

For example, refer to FIG. 4. On a reference plane parallel to the magnetic conductive sheet 3, an orthographic projection of the magnetic conductive sheet 3 covers an orthographic projection of the coil 4.

Refer to FIG. 3 and FIG. 4. The support portion 5 is disposed in an annular manner, and is disposed between the first component portion 31 and the second connecting member 2.

That is, with reference to FIG. 4, the support portion 5 is disposed on the side that is of the magnetic conductive sheet 3 and that is away from the bottom of the groove U, and is sleeved in the inner ring of the coil 4.

For example, a material of the support portion 5 may include an insulation material such as plastic or resin, and the support portion 5 has a specific hardness, so as to provide a specific support force.

For example, the material of the support portion may also include a magnetic material, for example, may include nanocrystalline, a ferrite material, silicon steel, or another magnetic material. Therefore, a specific support force is provided; and a function of shielding a magnetic field of the coil 4 is also implemented, to improve a wireless charging effect of the coil 4. In addition, a heat conduction effect can be improved, and heat generated by the coil 4 can be prevented from being accumulated in the electronic device 100 and affecting performance of the electronic device 100.

In the field of wireless charging technologies of wearable devices, with increasing functions, charging efficiency of the electronic device 100 is greatly challenged. In a related technology, charging efficiency of an electronic device needs to be further improved. In addition, in the related technology, a housing of the electronic device is prone to sinking or another problem of poor appearance.

In this embodiment of this application, the inner boundary of the magnetic conductive sheet 3 is set to exceed the inner boundary of the coil 4, so that an area of the magnetic conductive sheet 3 is larger than an area of the coil 4, thereby improving a shielding effect of the magnetic conductive sheet 3 on a magnetic field of the coil 4, enhancing a magnetic leakage prevention effect, and improving wireless charging efficiency of the electronic device 100.

Refer to FIG. 4. The inner boundary of the magnetic conductive sheet 3 exceeds the inner boundary of the coil 4, so that a gap occurs in a cavity enclosed by the groove U of the first connecting member 1 and the second connecting member 2. After assembly is completed, a problem of poor appearance such as sinking easily occurs in a position of the gap. In this embodiment of this application, a support portion 5 is disposed, and the support portion 5 is disposed between the first component portion 31 and the second connecting member 2, that is, the support portion 5 is filled in the foregoing idle cavity, to provide a specific support force and avoid the poor appearance of the watch case 10.

In addition, the support portion 5 is disposed on the first component portion 31 of the magnetic conductive sheet 3, that is, the annular support portion 5 is sleeved in the inner ring of the annular coil 4, so that a position shift in a direction of the coil 4 toward the inner ring can be avoided, thereby avoiding a problem that the charging efficiency is reduced due to inaccurate alignment between the coil 4 and an external charging device.

The support portion 5 is disposed between the first component portion 31 and the second connecting member. In an injection molding process of the second connecting member 2, the support portion 5 is blocked, so that an undesirable phenomenon such as melting of the magnetic conductive sheet 3 caused by direct impact of high-temperature plastic on the magnetic conductive sheet 3 can be avoided, thereby improving a product yield rate of the electronic device 100.

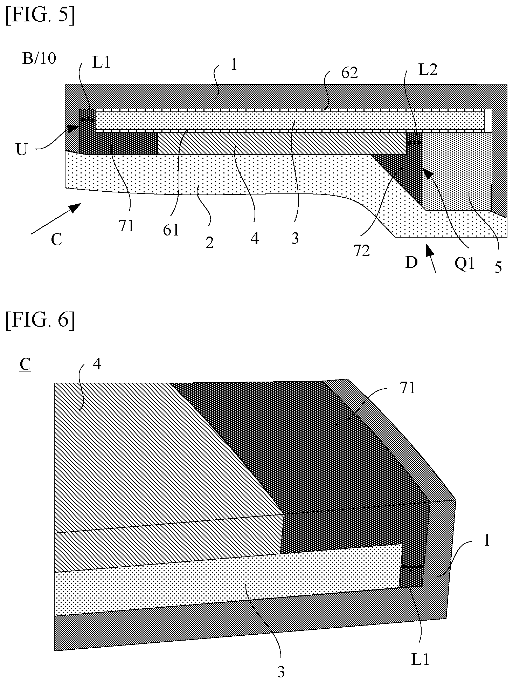

FIG. 5 is an enlarged view of a structure in a dashed box B in FIG. 4.

In some embodiments, as shown in FIG. 5, the watch case 10 further includes a first adhesive layer 61, and the first adhesive layer 61 is disposed on a side surface that is of the magnetic conductive sheet 3 and that is away from the bottom of the groove U.

Refer to FIG. 5. The coil 4 is bonded to the magnetic conductive sheet 3 through the first adhesive layer 61, and the support portion 5 is also bonded to the magnetic conductive sheet 3 through the first adhesive layer 61.

With the disposed first adhesive layer 61, the coil 4 and the support portion 5 may be fastened to the magnetic conductive sheet 3, so that a position of the coil 4 relative to the magnetic conductive sheet 3 is fixed, thereby avoiding a problem that charging efficiency of the electronic device 100 is reduced due to the position shift of the coil 4.

For example, a material of the first adhesive layer 61 includes a high-temperature-resistant material. For example, the adhesive may include a silicone adhesive, a phenolic resin adhesive, a urea-formaldehyde resin adhesive, a temperature-resistant epoxy adhesive, a polyimide adhesive, and the like.

For example, the first adhesive layer 61 may withstand a temperature higher than or equal to 250°C, for example, may withstand a high temperature of 300°C.

The material of the first adhesive layer 61 includes the high-temperature-resistant material, so that firmness of bonding between the coil 4 and the magnetic conductive sheet 3 and bonding between the support portion 5 and the magnetic conductive sheet 3 can be improved, thereby avoiding a problem that a position of the coil 4 is shifted because a bonding strength of the first adhesive layer 61 is reduced due to a high-temperature environment in an injection molding process of the first connecting member 1 and the second connecting member 2, thereby further ensuring the charging efficiency of the electronic device 100.

For example, as shown in FIG. 5, the watch case 10 may further include a second adhesive layer 62. The second adhesive layer 62 is disposed between the magnetic conductive sheet 3 and the bottom of the groove U, so that the magnetic conductive sheet 3 is fastened to the bottom of the groove U, thereby further avoiding position shifts of the magnetic conductive sheet 3 and the coil 4 located on the magnetic conductive sheet 3, and further ensuring the charging efficiency of the electronic device 100.

For example, a material of the second adhesive layer 62 may be the same as that of the first adhesive layer 61, for example, both may include a high-temperature-resistant material.

FIG. 6 is a diagram of a partial structure along a direction C in FIG. 5.

In some embodiments, as shown in FIG. 4, an outer boundary of the magnetic conductive sheet 3 exceeds an outer boundary of the coil 4, and a part that is of the magnetic conductive sheet 3 and that exceeds the outer boundary of the coil 4 is the second component portion 32.

The outer boundary of the magnetic conductive sheet 3 is set to exceed the outer boundary of the coil 4, so that an area of the magnetic conductive sheet 3 is larger than an area of the coil 4, thereby improving a shielding effect of the magnetic conductive sheet 3 on a magnetic field of the coil 4, and enhancing a magnetic leakage prevention effect.

Refer to FIG. 3. The watch case 10 further includes a first bonding portion 71, and the first bonding portion 71 is disposed in an annular manner. Refer to FIG. 4. The first bonding portion 71 is disposed between the second component portion 32 and the second connecting member 2.

That is, with reference to FIG. 4, the first bonding portion 71 is sleeved on an outer side of the coil 4, and is disposed in a cavity enclosed by the groove U of the first connecting member 1 and the second connecting member 2.

With the disposed first bonding portion 71, the magnetic conductive sheet 3 and the coil 4 may be further bonded, to further improve stability between the magnetic conductive sheet 3 and the coil 4, and avoid a problem that charging efficiency is reduced due to a change in a relative position relationship between the magnetic conductive sheet 3 and the coil 4, thereby improving a wireless charging effect of the electronic device 100.

The first bonding portion 71 is disposed between the second component portion 32 and the second connecting member 2, so that the first bonding portion 71 is filled in a gap formed after the outer boundary of the magnetic conductive sheet 3 exceeds the outer boundary of the coil 4, thereby providing a specific support force, and avoiding a problem of poor appearance such as sinking of the watch case 10 at the gap.

In addition, the first bonding portion 71 is sleeved on an outer ring of the coil 4, so that a position shift of the coil 4 in a direction toward the outer ring can be avoided, thereby further avoiding a problem that the charging efficiency is reduced due to inaccurate alignment between the coil 4 and an external charging device.

The first bonding portion 71 is disposed on a side that is of the second component portion 32 and that is away from the bottom of the groove U. In an injection molding process of the second connecting member 2, the first bonding portion 71 is blocked, so that an undesirable phenomenon such as melting of the magnetic conductive sheet 3 caused by direct impact of the high-temperature plastic on the magnetic conductive sheet 3 can be avoided, thereby improving a product yield rate of the electronic device 100.

For example, the first bonding portion 71 is a curing adhesive, and has specific hardness after being cured, so that the first bonding portion 71 has a bonding capability and may further provide a specific support force.

In some embodiments, refer to FIG. 5 and FIG. 6, there is a first gap L1 between the magnetic conductive sheet 3 and a side wall of the groove U, and a part of the first bonding portion 71 is filled in the first gap L1, so as to further avoid a position shift of the magnetic conductive sheet 3, and ensure the charging efficiency of the electronic device 100.

It may be understood that, the second connecting member 2 is not shown in FIG. 6 to avoid blocking.

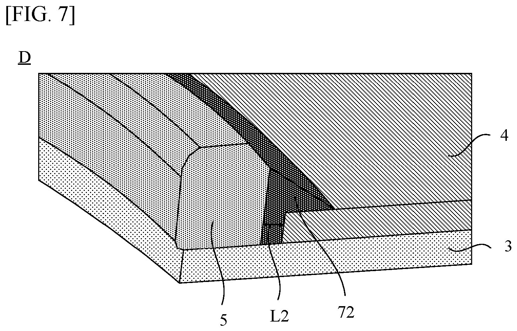

FIG. 7 is a diagram of a partial structure along a direction D in FIG. 5.

In some embodiments, as shown in FIG. 4, FIG. 5, and FIG. 7, a surface that is of the coil 4 and that is away from the magnetic conductive sheet 3 is closer to the magnetic conductive sheet 3 than a surface that is of the support portion 5 and that is away from the magnetic conductive sheet 3, so that after injection molding of the second connecting member 2 is completed, a part that is of the watch case 10 and that is around the sensor 40 is arched (with a protrusion of a specific height), thereby improving monitoring accuracy of a function such as heart rate monitoring of the sensor 40.

For example, in the case of the foregoing embodiment, an edge part of a surface that is of the coil 4 and that is away from the bottom of the groove U, a side surface that is of the support portion 5 and that is close to the coil 4, and the second connecting member 2 enclose a first sub-cavity Q1.

Refer to FIG. 5. "An edge part of a surface that is of the coil 4 and that is away from the bottom of the groove U" is a part in which an inner edge of the coil 4 is located.

Refer to FIG. 3. The watch case 10 further includes a second bonding portion 72, and the second bonding portion 72 is disposed in an annular manner. Refer to FIG. 5 and FIG. 7. The second bonding portion 72 is filled in the first sub-cavity Q1.

With the disposed second bonding portion 72, the support portion 5 and the coil 4 may be further bonded, to further improve stability of a structure of the coil 4, and avoid a problem that the charging efficiency is reduced due to a change in a position of the coil 4, thereby improving the wireless charging effect of the electronic device 100.

The second bonding portion 72 is disposed to fill the first sub-cavity Q1, so that the second bonding portion 72 can provide a specific support force, thereby avoiding a problem of poor appearance such as sinking of the watch case 10 at the first sub-cavity Q1.

For example, the second bonding portion 72 is a curing adhesive, and has specific hardness after being cured, so that the second bonding portion 72 has a bonding capability and may further provide a specific support force.

In some embodiments, with reference to FIG. 5 and FIG. 7, there is a second gap L2 between the coil 4 and the support portion 5, and a part of the second bonding portion 72 is filled in the second gap L2, so as to further avoid a position shift of the coil 4, and ensure the charging efficiency of the electronic device 100.

For example, the second bonding portion 72 may be filled twice. The second bonding portion 72 is filled in the second gap L2 for the first time. Before injection molding is performed on the second connecting member 2, the remaining material of the second bonding portion 72 is filled in the first sub-cavity Q1. The second bonding portion 72 is filled several times, so that it can be ensured that the second bonding portion 72 can fully fill the second gap L2, thereby avoiding a problem that the watch case 10 is prone to a poor appearance because the second gap L2 is not fully filled.

It may be understood that, for ease of illustration, neither the first connecting member 1 nor the second connecting member 2 is shown in FIG. 7.

In some embodiments, with reference to FIG. 4, after the magnetic conductive sheet 3, the coil 4, the support portion 5, the first adhesive layer 61, the first bonding portion 71, and the second bonding portion 72 are assembled and coated, initial heating is performed, so that the first bonding portion 71 and the second bonding portion 72 are initially cured and shaped, and the first adhesive layer 61 is activated to enable first adhesive layer 61 to have adhesive properties. Then, the components that are assembled and heated for the first time are placed into the groove U of the first connecting member 1 manufactured through injection molding, and injection molding is performed on the second connecting member 2; and the first bonding portion 71 and the second bonding portion 72 are cured for the second time by using an injection molding temperature of the second connecting member 2, thereby improving bonding effects and support effects of the first bonding portion 71 and the second bonding portion 72, and improving overall structural stability of the electronic device 100.

The foregoing descriptions are merely specific implementations of this application, but are not intended to limit the protection scope of this application. Any variation or replacement readily figured out by a person skilled in the art within the technical scope disclosed in this disclosure shall fall within the protection scope of this application. Therefore, the protection scope of this application shall be subject to the protection scope of the claims.

## Claims

1. A watch case, comprising:
a first connecting member, provided with an annular groove;
a second connecting member, connected to the first connecting member, wherein at least a part of the second connecting member covers an opening of the groove;
a magnetic conductive sheet, disposed in an annular manner, and disposed at a bottom of the groove;
a coil, disposed in an annular manner, and disposed on a side that is of the magnetic conductive sheet and that is away from the bottom of the groove, wherein an inner boundary of the magnetic conductive sheet exceeds an inner boundary of the coil, and a part that is of the magnetic conductive sheet and that exceeds the inner boundary of the coil is a first component portion; and
a support portion, disposed in an annular manner, and disposed between the first component portion and the second connecting member.

2. The watch case according to claim 1, further comprising:
a first adhesive layer, disposed on a side surface that is of the magnetic conductive sheet and that is away from the bottom of the groove, the coil is bonded to the magnetic conductive sheet through the first adhesive layer, and the support portion is bonded to the magnetic conductive sheet through the first adhesive layer.

3. The watch case according to claim 2, wherein a material of the first adhesive layer comprises a high-temperature-resistant material.

4. The watch case according to claim 1, wherein an outer boundary of the magnetic conductive sheet exceeds an outer boundary of the coil, and a part that is of the magnetic conductive sheet and that exceeds the outer boundary of the coil is a second component portion; and
the watch case further comprises:
a first bonding portion, disposed in an annular manner, and disposed between the second component portion and the second connecting member.

5. The watch case according to claim 4, wherein there is a first gap between the magnetic conductive sheet and a side wall of the groove, and a part of the first bonding portion is filled in the first gap.

6. The watch case according to claim 1, wherein a surface that is of the coil and that is away from the magnetic conductive sheet is closer to the magnetic conductive sheet than a surface that is of the support portion and that is away from the magnetic conductive sheet;
an edge part of a surface that is of the coil and that is away from the bottom of the groove, a side surface that is of the support portion and that is close to the coil, and the second connecting member enclose a first sub-cavity; and
the watch case further comprises:
a second bonding portion, disposed in an annular manner, wherein the second bonding portion is filled in the first sub-cavity.

7. The watch case according to claim 6, wherein there is a second gap between the coil and the support portion, and a part of the second bonding portion is filled in the second gap.

8. The watch case according to any one of claims 1 to 7, wherein a material of the support portion comprises a magnetic material.

9. The watch case according to any one of claims 1 to 7, wherein the second connecting member comprises a first sub-portion and a second sub-portion that are integrally disposed, the second sub-portion is arched relative to the first sub-portion in a direction away from the first connecting member, the first sub-portion covers the surface that is of the coil and that is away from the bottom of the groove, and the second sub-portion covers a surface that is of the support portion and that is away from the bottom of the groove.

10. An electronic device, comprising:
the watch case according to any one of claims 1 to 9, wherein the first connecting member in the watch case is further provided with a first opening, and the groove of the first connecting member is provided around the first opening; and the second connecting member in the watch case is provided with a second opening, and the second opening communicates with the first opening; and
a sensor, disposed on a side that is of the first connecting member and that is away from the second connecting member, wherein the first opening and the second opening expose at least a part of the sensor.
